# EUROPEAN PATENT APPLICATION

(11) **EP 0 595 432 A1**
(43) Date of publication of application: **04.05.1994**
(21) Application number: 93203029.9
(22) Date of filing: 28.10.1993
(51) Int. Cl.: A21B 3/15, A21C 13/00

(54) **A product carrier for dough pieces in a proofer**

(30) Priority: 28.10.1992 NL 9201870
(71) Applicant: GEBR. VAN CAPELLEVEEN B.V., NL-3972 NE Driebergen (NL)
(72) Inventor: van Capelleveen, Pieter, NL-3921 DG Elst (Utrecht) (NL)
(74) Representative: Smulders, Theodorus A.H.J., Ir.

(57) **Abstract**

The invention relates to a product carrier, in particular for use in a proofer, provided with a substantially rectangular frame (1) having two longitudinal edges (2) and two transverse edges (3), and provided with a cloth (6) connected with at least one transverse edge. The product carrier is characterized according to the invention by a plurality of spaced bars (4) extending transversely between the two longitudinal edges (2), at least the transverse edges (3) being movable longitudinally towards each other and away from each other between a collapsed and an extended position, and the cloth (6) being connected with the frame (1) near the two transverse edges (3) and having such a length that it is stretched tight in the extended condition of the transverse edges (3) and forms substantially semicircular folds (6a) between the bars (4) in the collapsed condition of the transverse edges (3).

## Description

The invention relates to a product carrier, in particular for use in a proofer, which product carrier is provided with a substantially rectangular frame having two longitudinal edges and two transverse edges, a cloth connected with at least one transverse edge and a plurality of spaced bars extending transversely between the two longitudinal edges, the cloth being stretched tight in a first condition to form a flat surface and allowed to sag in folds in a second condition between the transverse bars to form troughs for receiving dough pieces.

Such a product carrier is known from French patent 1 492 884. The main advantage of this known product carrier is that bringing the cloth from the first into the second condition can only be realized by using complicated external means.

Another product carrier is known from French patent 2 532 265 and is particularly suitable for the production of French loaves according to traditional methods. The known product carrier is provided with a profiled bottom plate in which the oblong dough pieces can be received for raising. One edge of the cloth is connected with the frame. When placing the dough pieces on the product carrier, the cloth is kept tight, and each time after a dough piece has been placed the cloth is allowed to sag slightly, so that the dough piece is received in a compartment of the profiled bottom plate. The dough pieces therefore must be placed one by one so as to obtain a correct folding of the cloth. When the dough pieces are to be removed from the product carrier, the cloth is pulled tight, thus releasing the dough pieces so that they can be picked up easily, but manually. Because the cloth is pulled tight from one side, the dough pieces are not simultaneously lifted, which involves a great risk of the dough pieces rolling against each other.

Because of the many manual operations to be carried out the above described product carrier is not suitable for the industrial production of French loaves. Therefore, in the industrial production of French loaves the raising of dough pieces takes place in the baking pans. This only requires that the dough pieces are placed in the baking pans, after which the baking pans are put in the proofer and, after a certain period, are placed in a baker's oven. The dough pieces therefore need not be moved from a product carrier for raising to a baking pan or a gauze band of a baker's oven. However, this mode of operation has the drawback that the routing of the baking pans through the factory is complicated, which involves logistic problems. Moreover, the griddles must first be cooled and often cleaned before they can be used for new dough pieces again. An excess of baking pans is therefore necessary, which requires much investment.

The object of the invention is to provide a product carrier which does not have the above drawbacks, which is used in proofers and is suitable for the industrial production of, in particular, French loaves.

The product carrier of the type mentioned in the opening paragraph is characterized according to the invention by the cloth being connected with the frame near the two transverse edges, at least the transverse edges being movable longitudinally towards each other and away from each other between a collapsed position in which the cloth is in the first condition and an extended position in which the cloth is in the second condition.

The main advantage of such a product carrier is that for bringing the cloth from the first into the second condition and conversely the frame can be engaged. The external means for engaging the frame may be of a substantially simpler construction than the means necessary for bringing the known product carrier from the first into the second condition.

Moreover, in such a product carrier, due to the presence of the bars, the cloth, in the collapsed condition of the transverse bars, automatically has the correct folding pattern for receiving oblong dough pieces.

According to a further elaboration of the invention, it is particularly favourable from a constructional point of view when the movable arrangement of the transverse edges is realized by composing the frame of two frame parts coupled together with at least one longitudinally collapsible and extendible connection.

Collapsing and extending the frame may then take place automatically through external means engaging the two frame parts. In the extended condition of the frame the cloth is stretched tight and the dough pieces can be automatically picked up with, e.g., a nibbling belt and transferred to baking pans or a band of a baker's oven. Hence the product carriers may remain in the proofer and need not circulate through the factory. In the collapsed condition the product carrier is particularly suitable for receiving oblong dough pieces to form French loaves. The semicircular folds prevent the oblong dough pieces from warping during the raising. In the extended condition, however, the product carrier is also quite suitable for raising normal dough pieces.

According to a further elaboration of the invention it is particularly favourable when the product carrier is provided with two collapsible and extendible connections substantially located in the middle of the longitudinal edges.

Because when moving apart the frame parts from the middle the cloth is pulled at on both ends, the folds are pulled more evenly tight and the dough pieces will less easily roll towards each other than when, as is the case with the known product carrier, the cloth is only pulled at on one end. Moreover, the bars prevent the dough pieces from rolling towards each other. It is of great importance that the dough pieces do not come into contact with each other, because otherwise there is a risk of the dough pieces sticking together and losing their shape.

In order to allow easy cleaning of the cloth, the product carrier is characterized according to a further elaboration of the invention by the cloth being provided at both ends located at the transverse edges with a hem in which an end bar can be inserted, each end bar being detachably connected with the frame. A cloth thus connected with the frame can be easily detached from the frame. After the end bars have been removed from the hems of the cloth, the cloth can be easily washed.

Furthermore, the bars may be connected with the frame near the upper side of the frame, the frame parts each being provided at the lower side with a plate or grid, and the distance between the bars and the plate or grid being such that in the collapsed condition of the frame the folds formed by the cloth rest on the plate or grid.

A product carrier of such construction has the advantage that in the collapsed condition of the frame the dough pieces are supported at the lower side by a surface so as to allow the folds to keep substantially the same sizes, independently of the mutual weight of the dough pieces contained in the folds. Moreover, the plate adds to the necessary rigidity of the two frame parts.

In order to enable a very simple construction of the means for collapsing and extending the frame parts, it is particularly favourable according to a further elaboration of the invention when the product carrier is provided with at least one spring keeping the frame parts in one of the extreme conditions under pre-tension. The external means then only need to bring the frame, against the spring force, into the other extreme condition. The frame is returned to the initial condition by actuating the spring.

In order to prevent the two frame parts from being pulled out of position or out of square in relation to each other, it is favourable when there is one spring in each longitudinal edge. Moreover, in such a construction the springs are protected against dust and dirt.

In order to further simplify the external means for bringing the two frame parts into the extreme conditions, the collapsible and extendible connection between the two frame parts may be controllable by means of at least one piston/cylinder assembly for assuming the collapsed and extended conditions. In a product carrier of such construction, a signal needs to be applied to the piston/cylinder assembly only if the product carrier is to assume another extreme condition. The piston/cylinder assembly then itself effects the sliding movement from one into the other extreme condition.

In order to enable this sliding movement to be carried out by means of piston/cylinder assemblies without pulling the two frame parts out of position or out of square in relation to each other, according to a further elaboration of the invention, one piston/cylinder assembly may be located in each longitudinal edge, a cylinder housing of each piston/cylinder assembly forming the longitudinally slidable connection between the two frame parts. Moreover, because the piston/cylinder assemblies are accommodated in the longitudinal edges of the frame, these are protected against the influence of dust and dirt.

Furthermore, according to a further elaboration of the invention, the product carrier may be characterized by carrier bows hinged on the frame, which, when swung downwards, lie on the product carrier and, when swung upwards, are arranged to carry another product carrier. Such a product carrier provided with carrier bows has the advantage that the product carriers can be stacked while they are filled with dough pieces. This stacking possibility leads to substantial space saving.

In explanation of the invention, an exemplary embodiment of the product carrier will be described with reference to the accompanying drawings.

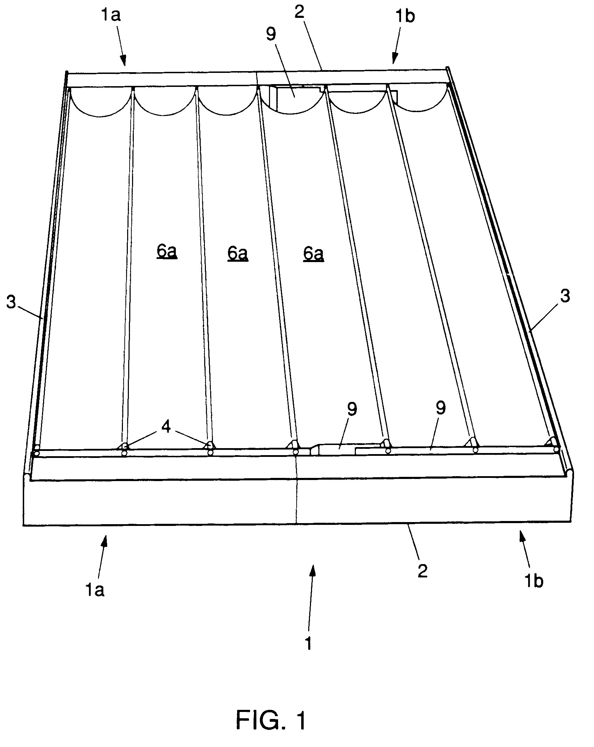

Fig. 1 shows a perspective view of an embodiment of the product carrier in collapsed condition; and

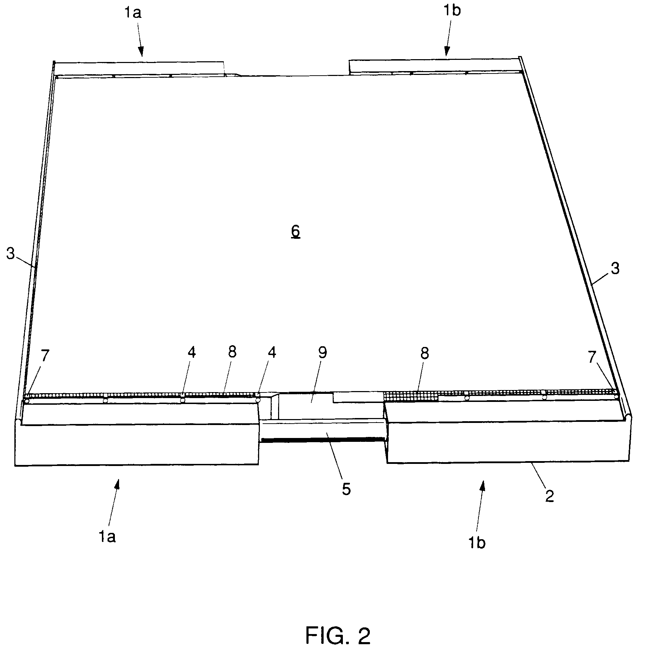

Fig. 2 shows a similar perspective view of the product carrier shown in Fig. 1 in extended condition.

The product carrier shown, which is particularly used in proofers for the industrial production of bread, is provided with a substantially rectangular frame 1 having two longitudinal edges 2 and two transverse edges 3. The product carrier is further provided with a plurality of spaced bars 4 transversely extending between the two longitudinal edges 2 and connected with the frame 1 near the upper end of the frame 1. The transverse edges 3 of the frame are movable away from each other and towards each other, because the frame 1 is composed of two frame parts 1a, 1b coupled together with two longitudinally collapsible and extendible connections 5. In the product carrier shown, the two collapsible and extendible connections 5 are substantially located in the middle of the longitudinal edges. Furthermore, the product carrier is provided with a cloth 6 connected with the frame near the two transverse edges 3. The cloth 6 has such a length that it is stretched tight in the extended condition of the frame 1 and forms substantially semicircular folds 6a between the bars 4 in the collapsed condition of the frame 1.

At both ends located near the tranverse edges 3 the cloth 6 is provided with a hem in which an end bar 7 can be inserted. The end bars 7 are detachably connected with the frame 1.

Each frame part 1a, 1b is provided at the lower side with a plate or grid 8. The distance between bars 4 and the plate or grid 8 is such that in the collapsed condition of the frame 1 the folds 6a formed by the cloth rest on the plate or grid 8.

In the exemplary embodiment shown, a piston/cylinder assembly controllable so as to cause the frame 1 to assume the collapsed and extended conditions is located in each longitudinal edge 2. The cylinder housing 5 of each piston/cylinder assembly forms the longitudinally slidable connection between the two frame parts 1a, 1b.

Such a piston/cylinder assembly may function, for instance, according to the principle of gas pressure springs of desk chairs.

In order to better protect the cylinder housings 5 against dust and dirt, the exemplary embodiment of the product carrier shown is further provided with shielding plates 9 slidable along each other.

It is clear that the invention is not limited to the exemplary embodiment described, but that various modifications are possible within the scope of the invention. Thus, for instance, instead of the piston/cylinder assemblies, the collapsing and extending movement of the two frame parts may be carried out by external means, or one spring keeping the frame parts 1a, 1b of the frame in an extreme condition under pre-tension may be located in each longitudinal edge. A product carrier of such construction may be brought in the two extreme conditions with simpler external means than a product carrier not provided with such internal controlling or actuating means.

The product carrier may optionally also be provided with carrier bows hinged on the frame. Such carrier bows enable the product carriers to be stacked even when in filled condition.

It is essential that the product carrier according to the invention is suitable for the industrial production of French loaves and that it may also serve for the production of normal loaves.

## Claims

1. A product carrier, in particular for use in a proofer, which product carrier is provided with a substantially rectangular frame (1) having two longitudinal edges (2) and two transverse edges (3), a cloth (6) connected with at least one transverse edge (3), and a plurality of spaced bars (4) extending transversely between the two longitudinal edges (2), the cloth (6) being stretched tight in a first condition to form a flat surface and allowed to sag in folds in a second condition between the transverse bars (4) to form troughs for receiving dough pieces, characterized by the cloth (6) being connected with the frame (1) near the two transverse edges (3), at least the transverse edges (3) being movable longitudinally towards each other and away from each other between a collapsed position in which the cloth (6) is in the first condition and an extended position in which the cloth (6) is in the second condition.

2. A product carrier according to claim 1, characterized by the movable arrangement of the transverse edges (3) being realized by composing the frame (1) of two frame parts (1a, 1b) coupled together with at least one longitudinally collapsible and extendible connection (5).

3. A product carrier according to claim 2, characterized by two collapsible and extendible connections (5) substantially located in the middle of the longitudinal edges (2).

4. A product carrier according to any of claims 2-3, characterized by the cloth (6) being provided at both ends located at the transverse edges (3) with a hem in which an end bar (7) can be inserted, each end bar (7) being detachably connected with the frame (1).

5. A product carrier according to any of claims 2-4, characterized by the bars (4) being connected with the frame (1) near the upper side of the frame (1), the frame parts (1a, 1b) each being provided at the lower side with a plate or grid (8), and the distance between the bars (4) and the plate or grid (8) being such that in the collapsed condition of the frame (1) the folds (6a) formed by the cloth (6) rest on the plate or grid (8).

6. A product carrier according to any of claims 2-5, characterized by at least one spring keeping the frame parts (1a, 1b) in one of the extreme conditions under pre-tension.

7. A product carrier according to claim 6, characterized by one spring being located in each longitudinal edge (2).

8. A product carrier according to any of claims 2-7, characterized by the collapsible and extendible connection (5) between the two frame parts (1a, 1b) being controllable by means of at least one piston/cylinder assembly for assuming the collapsed and extended conditions.

9. A product carrier according to claim 8, characterized by one piston/cylinder assembly being located in each longitudinal edge (2), a cylinder housing (5) of each piston/cylinder assembly forming the longitudinally slidable connection between the two frame parts (1a, 1b).

10. A product carrier according to any of the preceding claims, characterized by carrier bows hinged on the frame (1), which, when swung downwards, lie on the product carrier and, when swung upwards, are arranged to carry another product carrier.
